# EUROPEAN PATENT APPLICATION

(11) **EP 3 287 250 A1**
(43) Date of publication of application: **28.02.2018**
(21) Application number: 16404002.4
(22) Date of filing: 30.11.2016
(51) Int. Cl.: B29C 44/18, B29K 75/00, B29L 31/00

(54) **PACKAGED POLYURETHANE FOAM AND PRODUCTION METHOD**

(30) Priority: 26.08.2016 TR 201612105
(71) Applicant: Ertugrul, Mustafa, Melikgazi Kayseri (TR)
(72) Inventor: ERTUGRUL, Mustafa, Melikgazi Kayseri (TR)

(57) **Abstract**

Invention is developed to be used during the installation of doors, windows, frames, racks etc. and doesn't require additional cleanup and relates to packaged polyurethane foam (1) and production methods that includes a PU padding foam (2) and propellant gas, a laceration rope (1.1) enabling to unbind the package (1) after sealing and an adhesive tape (1.2) which is to be used on certain areas of the package.

## Description

### Technical Field

Invention relates to the method of packaged polyurethane foam and production method that is developed to be used during the installation of doors, windows, racks etc. and doesn't require additional cleanup (in the area of usage).

### Conventional Technique

In this day and age, polyurethane (PU) foam is used in many fields. The PU foam is specifically used in the installation of doors, windows, frames etc. and because of the adhesiveness of PU foam material and the feature to infill empty spaces and the swelling of foam; it is prevalently used in steel door installations.

Polyurethane foam, which is easily found in pressure pots, does have disadvantages along side its advantages.

The recognized technique of the polyurethane applications, the foam is found in a pressure level with a propellant gas. The usage of the item is as follows:
- The PU found in the pressure pot with the propellant gas is shaken.
- A thin tube/hose is attached to the spray in order to enable an easy access to the usage area.
- The PU foam is sprayed with the help of the spray cap.

In this conventional technique, it is difficult to ensure a homogeneous distribution of the foam that is sprayed with the help of the propellant gasses. Because the sprayed PU foam is directly proportional with the pressure the user is applying to the spray. The user applies different levels of pressure during the spraying process and the distribution of the foam becomes uneven. During the recognized technique the user sprays the PU foam towards the doorframe pins or to cases through locked holes. In this situation, either due to reasons mentioned above or the holes and pins that aren't equally distributed on the field of usage, the PU foam isn't applied evenly.

In this case, not only the foam is applied uneven but the PU foam might also overflow. There aren't alternative solutions for the overflow of the foam. The user needs to wait for the foam to dry and cut and remove the excess foam with the aid of a utility knife.

In the conventional technique, the foam that overflows or is sprayed elsewhere during the process contaminates the area of usage. This material doesn't compose for many years and the more PU foam splatters the area of usage. The more it contaminates the area the more the material harms the environment. In our invention, this situation has also been taken into account.

In the recognized technique, also as mentioned above, because of the uneven application of the PU foam, the cases that need fine adjustment of fixing such as loose doorframes can't be directly fixed due to over flow or inflammation of the foam.

Loose doorframes cause many problems including not closing or locking properly. These issues also cause customer dissatisfaction.

Moreover, the mentioned one box of PU foam is not adequate for the area of usage (for frame installation etc.). For this reason, a second box is required. However, another full box is more than needed and the whole PU foam material in the second box is not applied to the area of usage, and the boxes are not suitable to reuse once opened. In such cases, the excess foam freeze in the aerosol boxes. This causes extra cost for the user or the fitter.

Consequently, because of the above-mentioned issues that affect the user, fitter and the customers, our invention addresses these problems and provides solutions to inefficacy regarding the packaged polyurethane foam and production methods.

### Brief Description of The Invention

The present invention relates to polyurethane foam and production methods, meets the needs mentioned above and annihilates all the disadvantages and introduces new advantages to the usage of the material.

The first priority of the invention is to enable even, homogenous distribution of PU foam during installation of doors, frames etc.

Another objective of the invention is to prevent loose or contracted doorframes by applying the foam even on the surfaces and holes.

A further objective of the invention is to reduce the installataion time and increase the services and profitability.

Another objective of the invention is to minimize the damage cause by the PU foam materails to the environement.

The structural and characteristic features of the invention as well as all of the advantages shall be understood more clearly through the figures below and the references to these figures and the evaluation must therefore be conducted considering these figures and detailed descriptions.

### Figures to Help Explain the Invention

The subject to our application titled "the polyurethane foam and production method" is presented in the attached figures and the figures are as follows:
**Figure** 1 shows the PU foam package of present application titled "polyurethane foam and production method".
**Figure** 2 shows the unwrapped PU foam package (1) and its usage during the installation of a steel door in present application titled "polyurethane foam and production method".
**Figure** 3 shows the figure of PU foam packages of present application titled "polyurethane foam and production method".
**Figure 4** shows the figure of PU foam package usage during steel door installation procedure in present application titled "polyurethane foam and production method".

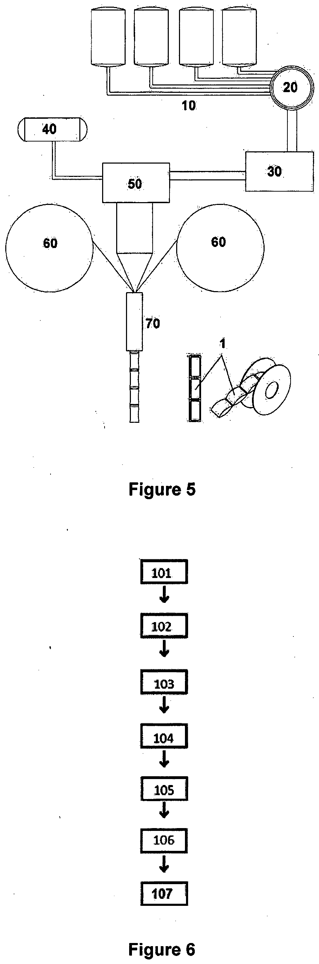

**Figure 5** schematic drawing of PU foam package regarding the production methods of present application titled "polyurethane foam and production method".
**Figure 6** shows the relative steps in the production method of PU foam packages in present application titled "polyurethane foam and production method".

The drawings need not necessarily be to scale and the unnecessary details for the present invention can be disregarded in the drawings. Furthermore, at least substantially identical or elements holding substantially identical functions are denoted by the same number.

### Commentary of the Reference Pieces

- **1.**: PU foam package
**1.1.** Laceration rope
**1.2.** Adhesive tape
- **2.**: PU foam padding
- **3.**: Inner case
- **4.**: Wall
- **5.**: Outer case
- **10.**: Raw material
- **20.**: Mixer
- **30.**: Pump
- **40.**: Propellant gas
- **50.**: Filling machine
- **60.**: Package
- **70.**: Packaging

### Commentary of the Process Steps

**101.** The raw PU material (10) is stored in tanks
**102.** The raw PU material is mixed by using the mixer (20)
**103.** The mixture is extracted by a pump (30) and sent to the filling machine (50)
**104.** The filling machine sends the mixture and the propellant gas (40) to the packeaging (70) counter
**105.** The packaging (70) counter fills the PU foam package (1) with a mixture and propellant gas (40) and packages as lines and groups
**106.** Adhesive tape (1.2) is applied to the back face of the packaged product
**107.** The final product is packaged in roll form

### Detailed Commentary of the Invention

In this detailed commentary, the preferred productions methods for polyurethane foam and production method are explained in order to clarify the issue and not to put any limits on the subject.

The present invention comprises of polyurethane foam and padding foam (2) and propellant gas; a laceration rope (1.1) enabling to unbind the package (1) after sealing and an adhesive tape (1.2) which is to be used on certain areas of the package.

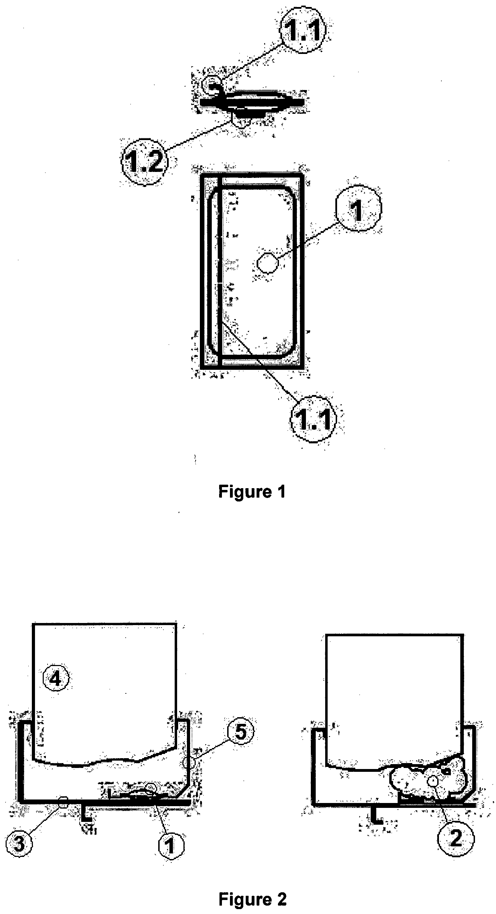

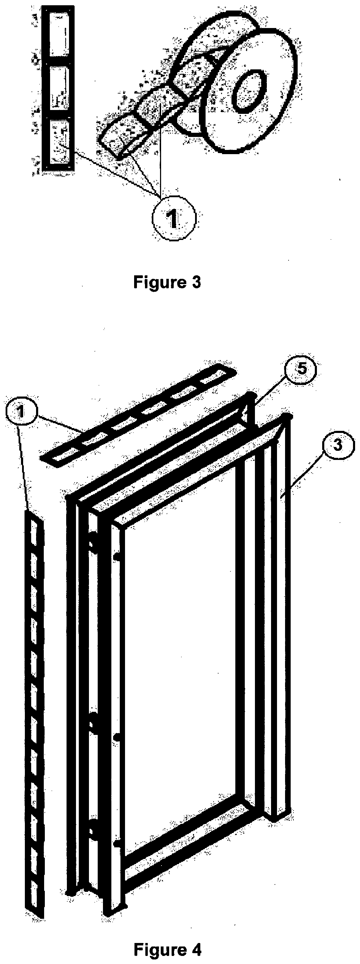

The mentioned polyurethane foam package (1) is produced in a package filling machine and as seen in fig. 3 the products are lined up successively. The user spares the amount of foam he desires to use and separates the material from the compressed leak proof area (seen as fig. 3). An adhesive tape (1.2) is attached to the area of usage. As seen in fig.2 and fig. 4 the area of usage in steel door installations are the insides of the cases. The polyurethane foam packages are placed to these parts. The PU foam packages (1) which are aligned successively are torn as the laceration rope (1.1) is pulled and with the effect of the propellant gas inside the PU foam padding spreads on the area of usage. Thus, the PU foam padding (2) distributed homogenously.

Moreover, because the PU foam packages (1) remain inside the case they do not create contamination for the environment.

The mentioned laceration rope (1.1) can be found anywhere on the package (1) to ensure the package to tear up either successively or singularly.

In the invention propellant gas is used as pusher effect.

The production of the polyurethane foam package (1) is as follows.

The PU raw material (10) is stored in tanks or similar storages; the PU raw material is mixed (102) by a mixer (20) until the material reaches the necessary consistency. The mixture is extracted by a pump (30) and sent (103) to the filling machine. The filling machine (50) sends the mixture and the propellant gas (40) to the packeaging (70) counter (105). The PU foam package (1) in the packaging (70) counter, as mentioned before includes a laceration rope (1.1). An adhesive tape (1.2) is applied to the back face of the packaged product (106), and in this way product can be attached to the used area. This procedure can vary depending on preference, the PU foam package can also be produced without the adhesive tape (1.2). Ideally a double-sided tape can be used. Lastly, the final product is packaged in roll form or any other form according to the consumer preference.

## Claims

1. The present invention is a polyurethane foam package (1) that is developed to be used during the installation of doors, windows, frames, racks etc. and doesn't require additional cleanup and eases the process, comprising of
- PU padding foam (2) and propellant gas,
- a laceration rope (1.1) enabling to unbind the package (1)
- an adhesive tape (1.2) which is to be used on certain areas of the package.

2. The polyurethane foam package (1) is in accord with Claim 1 includes propellant gas for a pusher effect.

3. The polyurethane foam package (1) is in accord with Claim 1 includes a laceration rope (1.1) which enables the unbinding of the package either successively or singularly.

4. The polyurethane foam package (1) is in accord with Claim 1 includes an adhesive tape (1.2).

5. The polyurethane foam package (1) is a production method comprising of
- the storing of PU raw material (10) in tanks (01),
- the mixing of the PU raw material by a mixer (20) (102),
- the extracting of the PU raw material by a pump (30) and setting the material off to the filling machine (50) (103),
- the filling machine sending the mixture and the propellant gas (40) to the packaging (70) counter (104),
- the packaging (70) counter filling the PU foam package (1) with a mixture and propellant gas (40) and aligning the products (105),
- the adhesive tape (1.2) being applied to the back face of the packaged product (106),
- the final product being packaged in roll form (107).

6. The polyurethane foam package (1) is in accord with Claim 5 comprising of the packing of the final product.

7. The polyurethane foam package (1) is in accord with Claim 5 comprising of the laceration rope (1.1) for the PU foam package (1) in the packaging (70) counter.
